# FASCICULE DE BREVET EUROPEEN

(11) **EP 1 694 493 B1**
(45) Date de publication et mention de la délivrance du brevet: **31.10.2007**
(21) Numéro de dépôt: 04804920.9
(22) Date de dépôt: 17.12.2004
(51) Int. Cl.: B29C 49/68, B29C 49/64, B29C 49/06

(54) **FOUR DE CHAUFFAGE D'UNE PREFORME EQUIPE DE DEUX VENTILATEURS DE REFROIDISSEMENT**
MIT ZWEI KÜHLGEBLÄSEN VERSEHENER OFEN ZUM ERWÄRMEN EINES VORFORMLINGS
FURNACE FOR HEATING A PREFORM, PROVIDED WITH TWO COOLING FANS

(30) Priorité: 19.12.2003 FR 0351123
(43) Date de publication de la demande: 30.08.2006
(73) Titulaire: SIDEL PARTICIPATIONS, 76930 Octeville-sur-Mer (FR)
(72) Inventeur: DOUDEMENT, Christophe; c/o SIDEL PARTICIPATIONS, F-76930 Octeville sur Mer (FR)
(74) Mandataire: Kohn, Philippe
(86) Numéro de dépôt international: PCT/EP2004/053581
(87) Numéro de publication internationale: WO 2005/065917

(56) Documents cités:
- WO-A-01/34369
- WO-A-03/024693
- US-B1- 6 361 301
- US-B1- 6 632 087

## Description

L'invention concerne un four de chauffage pour une préforme, notamment pour une préforme de récipient en plastique.

L'invention concerne plus particulièrement un four de chauffage pour une préforme, notamment pour une préforme de récipient en plastique, qui comporte un tunnel longitudinal de chauffage qui est délimité transversalement par les faces internes verticales longitudinales parallèles entre elles de deux parois, une première paroi chauffante étant équipée d'un système de chauffage, l'autre paroi aérée comportant des orifices d'aération destinés à laisser passer transversalement l'air soufflé par une soufflerie depuis l'amont, à l'extérieur du tunnel de chauffage, vers l'aval, à l'intérieur, et dans lequel une première partie de la préforme est chauffée dans le tunnel de chauffage, tandis que la seconde partie de la préforme est maintenue à l'extérieur du tunnel de chauffage à travers une ouverture longitudinale ménagée entre les bords longitudinaux des parois du tunnel de chauffage, la soufflerie soufflant transversalement de l'air vers la seconde partie de la préforme afin de maintenir la matière constitutive de cette seconde partie de préforme à une température inférieure à sa température de ramollissement.

La fabrication de récipients, et notamment de bouteilles, en plastique, par exemple en polyéthylène téréphtalate (PET), est généralement réalisée à partir de préformes qui sont conformées en bouteille par une opération de soufflage ou d'étirage-soufflage de leur corps et de leur fond. Les préformes ont généralement une forme d'éprouvette dont le col a déjà la forme définitive du goulot du récipient à réaliser. Le col comporte par exemple un filetage destiné à recevoir un bouchon à vis.

Avant de réaliser l'opération de soufflage, il est nécessaire de réchauffer les préformes dans un four de chauffage afin de ramollir le plastique. A cet effet, la matière plastique constituant les préformes est chauffée à une température supérieure à sa température de transition vitreuse.

On connaît déjà des fours de chauffage pour préformes du type qui comporte un tunnel longitudinal de chauffage. La préforme froide est transportée par un dispositif de transport depuis une première extrémité du tunnel, puis elle circule le long du tunnel dans lequel elle est chauffée avant de ressortir par la seconde extrémité du tunnel. La préforme ainsi réchauffée est prête pour l'opération de soufflage.

Pour assurer le chauffage en profondeur du fond et de la paroi cylindrique du corps de la préforme sur toute sa périphérie, les préformes sont généralement mises en rotation sur elles-mêmes pendant leur circulation dans le four. Par ailleurs, une paroi du tunnel est équipée de moyens de chauffage à rayonnement tandis que l'autre paroi est munie d'orifices d'aération pour permettre le passage d'air soufflé afin de favoriser un chauffage homogène dans toute l'épaisseur de la paroi cylindrique du corps de la préforme sans surchauffer la couche de matière superficielle formant face externe de la paroi cylindrique de la préforme.

En fait, l'air soufflé permet d'évacuer la chaleur de convection provoquée par les moyens de chauffage pour favoriser la pénétration du rayonnement qu'ils produisent dans l'épaisseur de la matière constituant le corps.

Cependant, le col de la préforme, qui est à sa forme et à ses dimensions définitives, ne doit pas être déformé lors des opérations de chauffage et/ou de soufflage. Il est donc essentiel de maintenir le col à une température inférieure à la température de transition vitreuse. A cet effet, le col de la préforme est maintenu à l'extérieur du tunnel à travers une ouverture du tunnel qui forme une rainure longitudinale.

Afin d'empêcher que la chaleur du tunnel de chauffage ne soit communiquée au col de la préforme, ce dernier est refroidi par de l'air soufflé par une soufflerie.

Il est connu d'équiper les fours d'une soufflerie unique qui permet d'une part l'homogénéisation de la chaleur dans le tunnel de chauffage, et d'autre part le refroidissement du col de la préforme. La soufflerie est alors équipée d'un déflecteur qui est situé en amont du tunnel et de la préforme par rapport au sens d'écoulement de l'air. Le déflecteur permet ainsi de dévier vers le col de la préforme une partie du flux d'air soufflé.

Le document WO-A1-03.024693 divulgue un four de chauffage équipé d'un premier et d'un deuxième ventilateurs qui sont agencés de manière à souffler de l'air respectivement vers le tunnel de chauffage et vers le col de la préforme.

Cependant, les ventilateurs sont agencés de part et d'autre du tunnel de chauffage. Le four ainsi conçu est donc très encombrant et peu compact.

La présente invention vise à concevoir un four compact et peu encombrant et dont l'efficacité du refroidissement du col de la préforme lors de l'opération de chauffage n'est pas altérée. A cette fin, l'invention propose un four du type décrit précédemment, dont la soufflerie comporte deux ventilateurs indépendants qui refoulent de l'air respectivement vers la paroi aérée et vers la seconde partie de la préforme maintenue à l'extérieur du tunnel de chauffage, et qui est caractérisé en ce que les deux conduites de refoulement sont adjacentes et formées par les compartiments supérieur et inférieur d'un caisson commun comportant une cloison de division.

Selon d'autres caractéristiques de l'invention :
- la soufflerie comporte deux conduites distinctes d'entrée d'air qui sont associées chacune à un ventilateur ;
- la soufflerie comporte deux arbres verticaux coaxiaux qui entraînent chacun un ventilateur associé ;
- la vitesse du flux d'air expulsé par le ventilateur associé à la paroi aérée est pilotée par un dispositif de commande ;
- les ventilateurs sont commandés par deux unités de commande distinctes.

D'autres caractéristiques et avantages de l'invention apparaîtront au cours de la lecture de la description détaillée qui va suivre pour la compréhension de laquelle on se reportera aux dessins en annexe, parmi lesquels :
- la figure 1 est une vue de profil qui représente une préforme destinée à être chauffée dans un four avant d'être transformée en récipient après une opération de soufflage ;
- la figure 2 est une vue de profil qui représente un four pour chauffer la préforme de la figure 1 qui est réalisé selon les enseignements de l'invention ;
- la figure 3 est une vue en section transversale selon le plan de coupe 3-3 de la figure 2 qui représente le four équipé d'une soufflerie qui comporte deux ventilateurs.

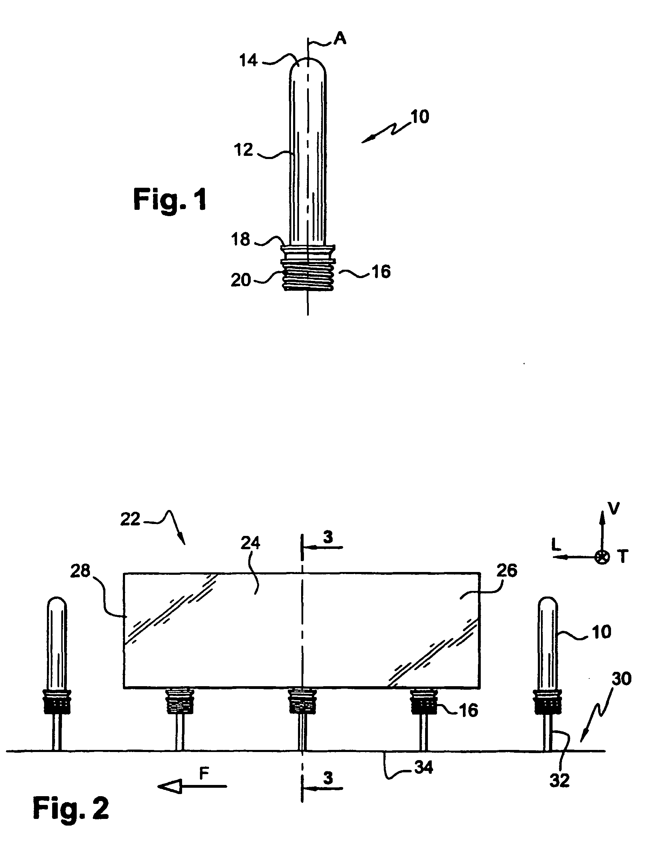

On adoptera dans la suite de la description, à titre non limitatif, une orientation longitudinale, verticale et transversale indiquée par le trièdre L, V, T de la figure 2.

Dans la suite de la description, on utilisera une orientation d'amont vers l'aval pour décrire l'écoulement des flux d'air.

On utilisera aussi les mêmes références pour désigner des éléments identiques, similaires ou analogues.

On a représenté à la figure 1 une préforme 10 qui est constituée d'un matériau plastique, tel que du polyéthylène téréphtalate (PET), et qui est destinée à être transformée en un récipient en plastique après une première opération de chauffage pour ramollir le plastique, puis une seconde opération de soufflage, pour conformer la préforme 10 en récipient.

La préforme 10 a une forme d'éprouvette ou de tube à essai d'axe vertical A. Le corps tubulaire 12 de la préforme 10 est fermé à son extrémité supérieure par un fond 14 hémisphérique tandis que son extrémité inférieure comporte un col 16 qui forme un goulot.

Le col 16 a déjà la forme définitive du goulot du récipient fini. Ainsi, pour obtenir un récipient fini, seul le corps tubulaire 12 et son fond 14 doivent être déformés par soufflage. Lors de l'opération de chauffage, il est donc important de ne réchauffer qu'une première partie de la préforme 10 comportant le corps tubulaire 12 et le fond 14 au-delà de la température de transition vitreuse du plastique, tout en maintenant la température du col 16, formant une seconde partie de la préforme 10, en deçà de la température de transition vitreuse.

Le col 16 est délimité supérieurement par une collerette 18. La face cylindrique externe 20 du col comporte ici un filetage qui est destiné à recevoir un bouchon fileté (non représenté) afin de fermer le récipient.

On a représenté à la figure 2 un four 22 pour chauffer la préforme 10 durant l'opération de chauffage. Le four 22 comporte ici un tunnel 24 longitudinal de chauffage à l'intérieur duquel la préforme 10 est destinée à être déplacée selon le sens indiqué par la flèche F. Le tunnel 24 comporte une première extrémité 26 d'entrée de la préforme 10, à droite selon la figure 2, et une seconde extrémité 28 de sortie de la préforme 10, à gauche selon la figure 2.

Comme illustré à la figure 2, le four 22 comporte un dispositif 30 de transport de la préforme 10 depuis l'entrée 26 jusqu'à la sortie 28 du tunnel 24. Le dispositif de transport 30 comporte un train de mandrins 32 de préhension de la préforme 10 qui s'étendent verticalement au-dessus d'un rail inférieur 34 qui s'étend sous le tunnel 24 de manière parallèle à ce dernier. Les mandrins 32 sont destinés à maintenir verticalement la préforme 10 durant son parcours le long du tunnel 24.

La forme longitudinale rectiligne du tunnel 24 tel que représentée à la figure 2 est donnée à titre d'exemple non limitatif.

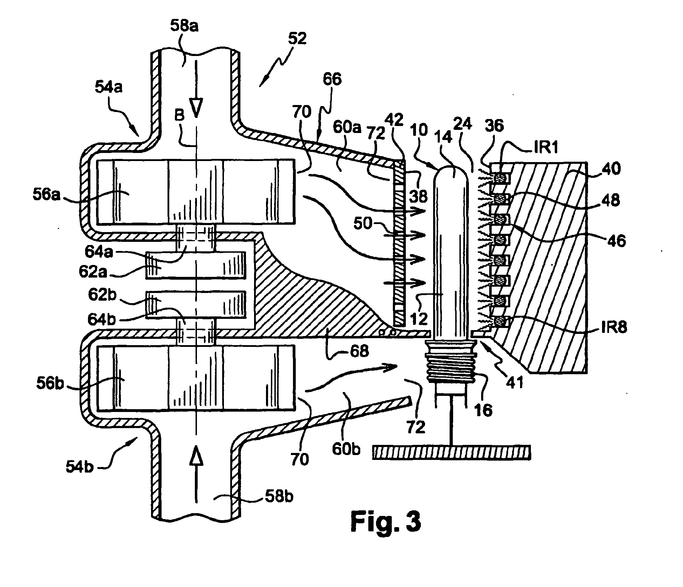

On a représenté à la figure 3 une section du tunnel 24. Il est délimité transversalement par deux faces internes 36 et 38 longitudinales verticales parallèles entre elles qui appartiennent respectivement à une première paroi 40, située à droite à la figure 3, et à une seconde paroi 42, située à gauche.

Le tunnel 24 n'est ici fermé ni vers le haut ni vers le bas. Ainsi, les bords longitudinaux inférieurs des faces internes 36 et 38 délimitent une ouverture inférieure 41 en forme de rainure longitudinale.

La première paroi 40 est équipée d'un dispositif de chauffage 46 du tunnel 24. Dans l'exemple représenté à la figure 3, le dispositif de chauffage 46 comporte huit lampes à infrarouges qui sont ici référencées IR1 à IR8 et qui ont la forme de tubes longitudinaux. Les tubes IR1 à IR8 sont maintenus par chacune de leurs extrémités à proximité de la face interne 36 de la première paroi 40 à l'aide de moyens, ici des cannelures longitudinales 48 réparties verticalement qui sont chacune destinées à loger une extrémité des lampes IR1 à IR8.

La seconde paroi 42 comporte ici des orifices 50 qui traversent transversalement son épaisseur afin de permettre à un flux d'air produit par une soufflerie 52 de pénétrer à l'intérieur du tunnel 24. Comme expliqué en préambule, le flux d'air permet ainsi de refroidir la couche superficielle de matière formant la face externe de la paroi cylindrique de la préforme 10.

Comme représenté à la figure 3, le corps tubulaire 12 et le fond 14 de la préforme 10 sont maintenus à l'intérieur du tunnel 24 chauffant, tandis que le col 16 et la collerette 18 sont maintenus à l'extérieur du tunnel 24 en passant à travers l'ouverture 41 inférieure.

Afin de maintenir le col 16 à une température inférieure à sa température de transition vitreuse, un flux d'air frais est soufflé transversalement en direction du col 16 par la soufflerie 52.

La soufflerie 52 est située transversalement à gauche de la seconde paroi 42 selon la figure 3.

Selon les enseignements de l'invention, la soufflerie comporte deux ventilateurs supérieur 54a et inférieur 54b distincts. Dans la suite de la description, les références des composants du ventilateur supérieur 54a seront suivies la lettre « a » tandis que les références des composants du ventilateur inférieur 54b seront suivies de la lettre « b ».

Chaque ventilateur 54a et 54b comporte principalement une roue à aubes motorisée 56a et 56b, aussi appelée turbine, qui est montée tournante autour d'un axe vertical B, une conduite axiale verticale d'entrée d'air 58a, 58b et une conduite tangentielle transversale de refoulement ou de sortie d'air 60a, 60b. Les ventilateurs 54a et 54b sont globalement symétriques par rapport à un plan horizontal médian, c'est-à-dire que les roues à aubes 56a et 56b et les conduites de refoulement 60a et 60b sont adjacentes tandis que les conduites d'entrées 58a et 58b sont orientées de façon opposée.

Les roues à aubes 56a et 56b sont montée à rotation autour du même axe vertical B. Elles sont chacune entraînées en rotation par un moteur associé 62a et 62b par l'intermédiaire d'un arbre 64a, 64b. Les moteurs 62a et 62b sont ici agencés verticalement entre les deux roues à aubes 56a et 56b.

Selon une variante non représentée de l'invention, les moteurs 62a et 62b sont situés à distance des ventilateurs 54a et 54b et ils entraînent les arbres 64a et 64b par l'intermédiaire de mécanismes de transmission de mouvement tels que des courroies. Les deux roues à aubes 56a et 56b peuvent ainsi être rapprochées verticalement l'une de l'autre de façon que la soufflerie 52 ait un encombrement moins important en hauteur.

Les conduites d'entrée d'air 58a et 58b sont agencées verticalement dans l'axe B des roues à aubes 56a et 56b de façon opposée l'une à l'autre.

Ainsi, la conduite d'entrée d'air 58a du ventilateur supérieur 54a s'étend verticalement au-dessus de la roue à aubes 56a de manière à aspirer l'air situé au-dessus de la soufflerie 52 vers le bas jusqu'à la roue à aubes 56a.

La conduite d'entrée d'air 58b du ventilateur 54b s'étend verticalement au-dessous de la roue à aubes 56b de manière à aspirer l'air situé sous de la soufflerie 52 vers le haut jusqu'à la roue à aubes 56b.

Les conduites de refoulement 60a et 60b sont orientées transversalement vers le tunnel 24. Elles sont adjacentes entre elles.

Dans l'exemple représenté à la figure 3, elles sont formées dans un caisson commun de sortie 66 qui est divisé en deux compartiments supérieur 60a et inférieur 60b par une cloison horizontale 68 qui est située sensiblement dans le plan de symétrie des deux ventilateurs 54a et 54b. La première extrémité transversale amont 70 du caisson 66, située à gauche et à la sortie des roues à aubes 56a et 56b en regardant la figure 3, et la seconde extrémité transversale aval 72 comportent des ouvertures de façon à laisser circuler transversalement un flux d'air depuis les roues à aubes 56a et 56b vers le tunnel 24 et le col 16 respectivement.

Le compartiment supérieur 60a forme ainsi une conduite de refoulement qui s'étend transversalement depuis la roue à aubes 56a jusqu'à la seconde paroi 42 du tunnel 24 de chauffage.

Le compartiment inférieur 60b forme ainsi une conduite de refoulement qui s'étend transversalement depuis la roue à aubes inférieure 56b jusqu'au voisinage du col 16 de la préforme 10.

Avantageusement, les moteurs 62a et 62b sont commandés par deux unités de commande distinctes. Il est ainsi possible de réguler le flux d'air passant à travers la seconde paroi 42 en agissant sur le ventilateur supérieur 54a, sans modifier le flux d'air nécessaire au refroidissement du col 16.

Lors du fonctionnement de la soufflerie 62, les moteurs 62a et 62b entraînent en rotation les roues à aubes 56a et 56b qui aspirent l'air par les conduites axiales d'entrée 58a et 58b comme représenté par les flèches de la figure 3.

La roue à aubes supérieure 56a souffle l'air ainsi aspiré dans la conduite de refoulement supérieure 60a. L'air refoulé passe à travers les orifices 50 de la seconde paroi 42 de façon à pénétrer à l'intérieur du tunnel 24.

La roue à aubes inférieure 56b souffle l'air ainsi aspiré dans la conduite de refoulement inférieure 60b. L'air refoulé est directement dirigé vers le col 16 afin de refroidir ce dernier.

Selon une variante non représentée de l'invention, La conduite d'entrée 58b du ventilateur inférieur 54b est contenue de façon coaxiale à l'intérieur de la conduite d'entrée 58a du ventilateur supérieur 54a. Le tronçon d'extrémité aval de la conduite d'entrée est prolongé vers le bas à travers un évidement vertical réservé dans l'axe du moyeu de la roue à aubes supérieure 56a, puis l'air circulant ainsi à travers le moyeu est aspiré par la roue à aubes inférieure 56b avant d'être refoulé dans la conduite de refoulement inférieure 60b. Cette configuration permet avantageusement au ventilateur inférieur 54b d'éviter d'aspirer des éléments susceptibles de se trouver sous le four 22, par exemple de la poussière jonchant le sol situé sous le four 22.

## Revendications

1. Four de chauffage (22) pour une préforme (10), notamment pour une préforme de récipient en plastique, qui comporte un tunnel (24) longitudinal de chauffage qui est délimité transversalement par les faces (36, 38) internes verticales longitudinales parallèles entre elles de deux parois (40, 42), une première paroi chauffante (40) étant équipée d'un système de chauffage (46), l'autre paroi aérée (42) comportant des orifices d'aération (50) destinés à laisser passer transversalement l'air soufflé par une soufflerie (52) depuis l'amont, à l'extérieur du tunnel (24) de chauffage, vers l'aval, à l'intérieur, et dans lequel une première partie (12, 14) de la préforme (10) est chauffée dans le tunnel (24) de chauffage, tandis qu'une seconde partie (16) de la préforme (10) est maintenue à l'extérieur du tunnel (24) de chauffage à travers une ouverture (41) longitudinale ménagée entre les bords longitudinaux des parois (36, 38) du tunnel (24) de chauffage, la soufflerie (52) comportant deux ventilateurs (54a, 54b) indépendants qui refoulent de l'air transversalement respectivement vers la paroi aérée (42) et vers la seconde partie (16) de la préforme (10) afin de maintenir la matière constitutive de cette seconde partie (16) de la préforme (10) à une température inférieure à sa température de ramollissement, et la soufflerie (52) comportant deux conduites distinctes (60a, 60b) de refoulement de l'air dont chacune est associée à un ventilateur (54a, 54b),
**caractérisé en ce que** les deux conduites de refoulement (60a, 60b) sont adjacentes et formées par les compartiments supérieur et inférieur d'un caisson commun (66) comportant une cloison de division (68).

2. Four selon la revendication précédente, **caractérisé en ce que** la soufflerie (52) comporte deux conduites distinctes d'entrée d'air (58a, 58b) qui sont associées chacune à un ventilateur (54a, 54b).

3. Four (22) selon la revendication précédente, **caractérisé en ce que** la soufflerie (52) comporte deux arbres (64a, 64b) verticaux coaxiaux qui entraînent chacun un ventilateur associé (54a, 54b).

4. Four (22) selon l'une quelconque des revendications précédentes, **caractérisé en ce que** la vitesse du flux d'air expulsé par le ventilateur (54a) associé à la paroi aérée (42) est pilotée par un dispositif de commande.

5. Four (22) selon l'une quelconque des revendications précédentes, **caractérisé en ce que** les ventilateurs (54a, 54b) sont commandés par deux unités de commande distinctes.

## Claims

1. Furnace (22) for heating a preform (10), especially a plastic container preform, which comprises a longitudinal heating tunnel (24) bounded transversely by the mutually parallel longitudinal vertical internal faces (36, 38) of two walls (40, 42), a first heating wall (40) being equipped with a heating system (46), and the other an aerated wall (42), having aeration orifices (50) that are intended to let the air blown by a blower (52) pass through them transversely from the upstream, outside the heating tunnel (24), to the downstream, inside the latter, and in which furnace a first portion (12, 14) of the preform (10) is heated in the heating tunnel (24), while a second portion (16) of the preform (10) is held outside the heating tunnel (24) through a longitudinal opening (41) made between the longitudinal edges of the walls (36, 38) of the heating tunnel (24), the blower (52) comprising two independent fans (54a, 54b) that deliver air transversely to the aerated wall (42) and to the second portion (16) of the preform (10) respectively, so as to keep the constituent material of this second portion (16) of the preform (10) at a temperature below its softening point, and the blower (52) including two separate air delivery ducts (60a, 60b) each associated with a fan (54a, 54b).
**characterized in that** the two delivery ducts (60a, 60b) are adjacent and are formed by the upper and lower compartments of a common box (66) having a dividing partition (68).

2. Furnace according to the preceding claim, **characterized in that** the blower (52) includes two separate air inlet ducts (58a, 58b) that are each associated with a fan (54a, 54b).

3. Furnace (22) according to the preceding claim, **characterized in that** the blower (52) includes two coaxial vertical shafts (64a, 64b), each driving an associated fan (54a, 54b).

4. Furnace (22) according to any one of the preceding claims, **characterized in that** the speed of the air stream expelled by the fan (54a) associated with the aerated wall (42) is controlled by a control device.

5. Furnace (22) according to any one of the preceding claims, **characterized in that** the fans (54a, 54b) are controlled by two separate control units.

## Patentansprüche

1. Ofen (22) zum Erwärmen eines Vorformlings (10), insbesondere eines Vorformlings für einen Behälter aus Kunststoff, welcher einen Längstunnel (24) zum Erwärmen aufweist, der quer durch die in Längsrichtung parallelen senkrechten Innenflächen (36, 38) zweier Wände (40, 42) abgegrenzt wird, wobei eine erste Heizwand (40) mit einem Heizsystem (46) ausgestattet ist und die andere belüftete Wand (42) Lüftungsöffnungen (50) aufweist, die dazu bestimmt sind, die Luft quer passieren zu lassen, die von einem stromaufwärts gelegenen Gebläse (52) außerhalb des Heiztunnels (24) stromabwärts zum Innern desselben bewegt wird, und bei welchem ein erster Teil (12, 14) des Vorformlings (10) in dem Heiztunnel (24) erwärmt wird, wohingegen der zweite Teil (16) des Vorformlings (10) durch eine Längsöffnung (41), die zwischen den Längsrändern der Wände (36, 38) des Heiztunnels (24) vorgesehen ist, außerhalb des Heiztunnels (24) gehalten wird, wobei das Gebläse (52) zwei voneinander unabhängige Lüfter (54a, 54b) aufweist, die jeweils quer die Luft zur belüfteten Wand (42) und zum zweiten Teil (16) des Vorformlings (10) bewegen, um das Material, das den zweiten Teil (16) des Vorformlings bildet, auf einer Temperatur zu halten, die geringer ist als die Plastifizierungstemperatur, und wobei das Gebläse (52) zwei getrennte Luftverdrängungsleitungen (60a, 60b) aufweist, die jeweils einem Lüfter (54a, 54b) zugeordnet sind,
**dadurch gekennzeichnet, dass** die beiden Verdrängungsleitungen (60a, 60b) aneinander angrenzen und durch das obere und untere Abteil eines gemeinsamen Gehäuses (66), das eine Trennwand (68) aufweist, gebildet sind.

2. Ofen gemäß einem der vorausgegangenen Ansprüche, **dadurch gekennzeichnet, dass** das Gebläse (52) zwei getrennte Leitungen zum Einlassen von Luft (58a, 58b) aufweist, die jeweils einem Lüfter (54a, 54b) zugeordnet sind.

3. Ofen (22) gemäß dem vorausgegangenen Anspruch, **dadurch gekennzeichnet, dass** das Gebläse (52) zwei senkrechte koaxiale Wellen (64a, 64b) aufweist, die jeweils einen zugeordneten Lüfter (54a, 54b) antreiben.

4. Ofen (22) gemäß einem der vorausgegangenen Ansprüche, **dadurch gekennzeichnet, dass** die Geschwindigkeit des von dem Lüfter (54a), welcher der belüfteten Wand (42) zugeordnet ist, ausgestoßenen Luftstroms von einer Steuervorrichtung gesteuert wird.

5. Ofen (22) gemäß einem der vorausgegangenen Ansprüche, **dadurch gekennzeichnet, dass** die Lüfter von zwei getrennten Steuereinheiten gesteuert werden.
